# EUROPÄISCHE PATENTANMELDUNG

(11) **EP 2 637 395 A2**
(43) Veröffentlichungstag der Anmeldung: **11.09.2013**
(21) Anmeldenummer: 13158220.7
(22) Anmeldetag: 07.03.2013
(51) Int. Cl.: H04N 1/00, H04N 1/32

(54) **Vorrichtung und Verfahren zur Personalisierung von Fotoprodukten**

(30) Priorität: 07.03.2012 DE 102012203556
(71) Anmelder: CeWe Color AG & Co. OHG, 26133 Oldenburg (DE)
(72) Erfinder: Fageth, Reiner, 26131 Oldenburg (DE)
(74) Vertreter: Eisenführ, Speiser & Partner

(57) **Zusammenfassung**

Die Erfindung betrifft eine Vorrichtung zum Erzeugen einer Repräsentation eines personalisierten Fotoprodukts. Die Vorrichtung (1) umfasst eine Eingabeeinheit (4) zum Eingeben eines von einem Benutzer mit einem Stift erzeugbaren persönlichen Elements, eine Produktbereitstellungseinheit (5) zum Bereitstellen einer Repräsentation eines Fotoprodukts und eine Personalisierungseinheit (6) zum Personalisieren der Repräsentation des Fotoprodukts mittels des eingegebenen persönlichen Elements. Mittels der Vorrichtung kann ein Fotoprodukt mit einem hohen Personalisierungsgrad erzeugt werden.

## Beschreibung

Die Erfindung bezieht sich auf eine Vorrichtung, ein Verfahren und ein Computerprogramm zum Herstellen einer Repräsentation eines personalisierten Fotoprodukts.

Es ist bekannt, Fotoprodukte, wie beispielsweise Fotobücher oder Grußkarten, zu personalisieren, indem ein Benutzer aus einer Vielzahl von Hintergrundbildern und/oder Designschemata ein gewünschtes Hintergrundbild bzw. Designschema auswählt. Diese Personalisierung des Fotoprodukts erfolgt typischerweise an einem Computer, der sich bei dem Benutzer zu Hause befinden kann, oder an einer Fotostation, wie sie beispielsweise in Fotogeschäften oder Kaufhäusern aufgestellt sind. Um einen hohen Personalisierungsgrad zu erreichen, muss eine große Anzahl von Hintergrundbildern und Designschemata, aus denen der Benutzer auswählen kann, abgespeichert werden. Dies führt zu einem relativ großen Speicherbedarf.

Es ist daher eine Aufgabe der vorliegenden Erfindung, eine Vorrichtung, ein Verfahren und ein Computerprogramm zum Herstellen einer Repräsentation eines personalisierten Fotoprodukts bereitzustellen, die es ermöglichen, den für einen hohen Personalisierungsgrad benötigten Speicherbedarf zu reduzieren.

Die Aufgabe wird durch eine Vorrichtung zum Erzeugen einer Repräsentation eines personalisierten Fotoprodukts gelöst, wobei die Vorrichtung aufweist:
- eine Eingabeeinheit zum Eingeben eines von einem Benutzer mit einem Stift erzeugbaren persönlichen Elements,
- eine Produktbereitstellungseinheit zum Bereitstellen einer Repräsentation eines Fotoprodukts,
- eine Personalisierungseinheit zum Personalisieren der Repräsentation des Fotoprodukts mittels des eingegebenen persönlichen Elements.

Eine derartige Vorrichtung ermöglicht es, ein Fotoprodukt zu personalisieren, indem ein Benutzer zunächst ein mit einem Stift erzeugbares persönliches Element erzeugt, welches anschließend oder zeitgleich von der Personalisierungseinheit zum Personalisieren der Repräsentation des Fotoprodukts verwendet wird. Ein sehr hoher Personalisierungsgrad kann dadurch erreicht werden, ohne dass zwingend beispielsweise vorgegebene Hintergrundbilder und/oder Designschemata in einer großen Anzahl abgespeichert sein müssen. Dies kann zu einer Reduzierung des mit einem hohen Personalisierungsgrad verbundenen Speicherbedarfs führen.

Die Eingabeeinheit weist bevorzugt einen Stift auf, wobei die Eingabeeinheit ausgebildet ist, eine durch einen Benutzer durchgeführte Bewegung des Stifts zur Erzeugung des persönlichen Elements zu erfassen. Hierdurch kann das persönliche Element auf einfache Art und Weise in die Vorrichtung eingegeben werden. In einer bevorzugten Ausführungsform ist der Stift ein Digitalstift, der beispielsweise in Verbindung mit digitalem Papier dazu verwendet werden kann, eine Handschrift oder eine Handskizze an einen Computer zu übertragen. Die Eingabeeinheit kann daher beispielsweise ein Digitalstift sein bzw. einen Digitalstift aufweisen, mittels dem eine Handschrift oder eine Handskizze als persönliches Element an einen Computer übertragen werden, der die Produktbereitstellungseinheit und die Personalisierungseinheit umfasst. Gemeinsam mit dem Digitalstift oder alternativ zu diesem ist bevorzugt auch ein Tablett-Computer oder ein anderes Gerät mit einem berührungsempfindlichen Bildschirm einsetzbar. Die Produktbereitstellungseinheit stellt dann beispielsweise eine Repräsentation eines Fotobuchs zur Verfügung, das durch die Personalisierungseinheit mittels der vom Digitalstift übertragenen Handschrift bzw. Handskizze personalisiert wird. Der Digitalstift kann beispielsweise eine Kugelschreibermine, eine Infrarotkamera, einen Prozessor, einen Datenspeicher, eine Batterie und eine Sendeeinheit, wie eine Bluetooth-Schnittstelle, aufweisen. Der digitale Stift kann so angepasst sein, dass die Infrarotkamera während des Schreibens die Bewegung der Kugelschreibermine auf insbesondere einem Punktraster eines digitalen Papiers erfasst, die dann im Datenspeicher zumindest zwischengespeichert wird. Die erfasste Bewegung und damit die Handschrift bzw. Handskizze können dann mittels der Bluetooth-Schnittstelle an den Computer mit der Produktbereitstellungseinheit und der Personalisierungseinheit übertragen werden. Alternativ oder zusätzlich kann der Digitalstift auch eine Kugelschreibermine, einen oder mehrere Beschleunigungssensoren, einen Prozessor, einen Datenspeicher, eine Batterie und eine Sendeeinheit aufweisen. So ist der Digitalstift auch auf herkömmlichem Papier einsetzbar und ein Nutzer ist in der Lage, die geschriebenen oder skizzierten Elemente direkt mit dem Auge zu erfassen. Mittels der Beschleunigungssensoren ist eine Bewegung des Stiftes auf einfache Weise erfassbar und kann mittels der Sendeeinheit an den Computer übertragen werden. In einer Weiterbildung weist der Digitalstift einen Speicher und einen USB-Anschluss auf, so dass eine erfasste Bewegung zunächst gespeichert und anschließend mittels einer USB-Schnittstelle an den Computer übermittelt werden kann. So ist der Digitalstift an jedem beliebigen Ort, an dem keine direkte Verbindung zu dem Computer besteht, einsetzbar. An dem Computer kann alternativ zu dem USB-Anschluss auch eine spezielle Digitalstift-Dockingstation vorgesehen sein.

Es ist des Weiteren bevorzugt, dass die Eingabeeinheit einen Touchscreen aufweist, wobei die Eingabeeinheit angepasst ist, eine auf dem Touchscreen durchgeführte Bewegung zur Erzeugung des persönlichen Elements zu erfassen. Beispielsweise kann mittels eines Fingers, eines Stifts oder eines anderen Hilfsmittels eine Bewegung auf dem Touchscreen durchgeführt werden, die dann zur Erzeugung des persönlichen Elements erfasst wird. Ein Touchscreen ist eine berührungsempfindliche Fläche, wobei die berührungsempfindliche Fläche derart angepasst ist, dass sie die Eingabe des persönlichen Elements und optional zusätzlich das Anzeigen von Informationen ermöglicht. Der Touchscreen kann also beispielsweise ein reines Eingabemittel sein oder zusätzlich als Monitor zum Anzeigen von Informationen ausgebildet sein. Mittels des Touchscreens kann eine Schreib- oder Zeichenbewegung der Hand auf einfache Art und Weise zum Eingeben des persönlichen Elements erfasst werden.

Die Eingabeeinheit kann auch eine Schnittstelle eines Computers sein, wie beispielsweise eine Bluetooth-Schnittstelle, die mit einem separaten Eingabeelement, wie beispielsweise einem Digitalstift oder einem Touchscreen, kommuniziert, um das persönliche Element zu erfassen. In diesem Beispiel wäre der Digitalstift oder der Touchscreen nicht Teil der Eingabeeinheit, sondern die Eingabeeinheit umfasst eine Schnittstelle, die die von dem Digitalstift oder dem Touchscreen aufgenommene Bewegung empfängt und als persönliches Element der Personalisierungseinheit zum Personalisieren der Repräsentation des Fotoprodukts bereitstellt.

In einer bevorzugten Ausführungsform ist das persönliche Element eine Handschrift oder eine Handskizze. Insbesondere eine Handschrift oder eine Handskizze stellen ein in besonderem Maße persönliches Element dar. Mittels einer Handschrift oder einer Handskizze können Fotoprodukte auf einfache Art und Weise wirkungsvoll personalisiert werden. Es ist beispielsweise nicht erforderlich, Textelemente mittels vorgegebener Schriftarten, welche Handschriften nachahmen, zum Personalisieren von Fotoprodukten zu nutzen, sondern es können direkt persönliche Handschriften oder Handskizzen des Benutzers zum Personalisieren verwendet werden.

Bevorzugt ist die Produktbereitstellungseinheit ausgebildet, zumindest eine der folgenden Produktrepräsentationen als Repräsentation des Fotoprodukts bereitzustellen: Fotobuch, Fotogrußkarte, Fototasse, Fotokalender. Die Produktbereitstellungseinheit umfasst beispielsweise eine Speichereinheit, auf dem die Repräsentation eines Fotoprodukts, wie beispielsweise die Repräsentation eines Fotobuchs, gespeichert ist. Die Produktbereitstellungseinheit kann auch eine Empfangseinheit aufweisen, die ausgebildet ist, eine Repräsentation eines Fotoprodukts von einer Speichereinheit, die in diesem Beispiel nicht Teil der Produktbereitstellungseinheit ist, zu empfangen. Die Produktbereitstellungseinheit ist dann weiter ausgebildet, die empfangene Repräsentation des Fotoprodukts der Personalisierungseinheit bereitzustellen. Die Produktbereitstellungseinheit kann beispielsweise auch eine Hardware- oder Softwarekomponente sein, die die Repräsentation des Fotoprodukts erzeugt. Die Produktbereitstellungseinheit kann beispielsweise ausgebildet sein, eine Repräsentation eines Fotobuchs auf bekannte Art und Weise zu erzeugen, wobei die erzeugte Repräsentation des Fotobuchs dann mittels der Personalisierungseinheit unter Verwendung des eingegebenen persönlichen Elements personalisiert wird.

Die Vorrichtung zum Herstellen einer Repräsentation eines persönlichen Fotoprodukts weist bevorzugt eine Anzeigeeinheit, wie einen Monitor auf, auf dem die bereitgestellte Repräsentation des Fotoprodukts, beispielsweise die Repräsentation eines Fotobuchs, das eingegebene persönliche Element und die schließlich personalisierte Repräsentation des Fotoprodukts angezeigt werden können.

Es kann vorgesehen sein, dass die Personalisierungseinheit ausgebildet ist, einem Benutzer zu ermöglichen, einen Bereich auf der Repräsentation des Fotoprodukts auszuwählen, wobei die Personalisierungseinheit angepasst ist, das persönliche Element in den ausgewählten Bereich einzufügen. Dadurch ist eine noch deutlichere Personalisierung ermöglicht, da der Benutzer auch eine relative Anordnung der Repräsentation des Fotoprodukts und des persönlichen Elements zueinander auswählen kann. Hierzu kann die Personalisierungseinheit ein Teil eines Computers sein, beispielsweise eine Hardware- oder Softwarekomponente, die eine grafische Benutzeroberfläche aufweist. Die grafische Benutzeroberfläche ist bevorzugt so ausgebildet, dass sie dem Benutzer ermöglicht, das persönliche Element, insbesondere die Handschrift oder die Handskizze, an einer gewünschten Position auf der Repräsentation des Fotoprodukts, beispielsweise auf eine Repräsentation eines Fotobuchs, anzuordnen. Bevorzugt können auch die Größenrelationen der Repräsentation des Fotoprodukts und des persönlichen Elements zueinander von dem Benutzer beeinflusst und/oder ausgewählt werden.

In einer bevorzugten Ausführungsform sind die Eingabeeinheit und die Personalisierungseinheit ausgebildet, ein von dem Benutzer erzeugtes persönliches Element in Echtzeit in den ausgewählten Bereich einzufügen. Vorzugsweise ist die Personalisierungseinheit ferner dazu ausgebildet, eine Veränderung des ausgewählten Bereichs in Echtzeit durch den Benutzer zu ermöglichen. Die Vorrichtung kann also beispielsweise angepasst sein, gleichzeitig mit dem Erfassen einer Handschrift oder einer Handskizze diese auf der Repräsentation des Fotoprodukts, insbesondere an der ausgewählten Stelle einer Repräsentation eines Fotobuchs, auf beispielsweise einem Monitor anzuzeigen. Zum Beispiel kann der Benutzer hierdurch während eines Schreibvorgangs überprüfen, ob das Ergebnis der Personalisierung den Erwartungen entspricht und die Personalisierung gegebenenfalls sofort ändern.

In einer weiteren bevorzugten Ausführungsform weist die Vorrichtung eine Sendeeinheit zum Senden der Repräsentation des personalisierten Fotoprodukts an einen Empfänger auf. Die Motivation eines Benutzers zur Vornahme einer Personalisierung eines Fotoprodukts ist häufig, das Fotoprodukt oder eine Repräsentation des Fotoprodukts anderen Personen zugänglich zu machen. Dies kann einerseits auf körperliche Art geschehen, indem der Benutzer das hergestellte Fotoprodukt einer Person übergibt, oder andererseits, indem der Benutzer mittels einer Sendeeinheit eine Repräsentation des personalisierten Fotoprodukts an eine Empfangseinheit, das heißt, einen Empfänger, sendet, die die Repräsentation des personalisierten Fotoprodukts anzeigt, so dass eine Person die Anzeige der Repräsentation wahrnehmen kann. Beispielsweise kann die Sendeeinheit angepasst sein, die Repräsentation an soziale Netzwerke, wie beispielsweise Facebook, Online-Fotogalerien und dergleichen zu senden, in denen andere Personen die Repräsentation betrachten können. Bevorzugt ist vorgesehen, dass andere Personen, denen die Repräsentation zugänglich gemacht wurde, ein der Repräsentation entsprechendes Fotoprodukt bestellen können.

Die Sendeeinheit, die bevorzugt eine Hardware- oder Softwarekomponente ist, kann angepasst sein, mit der personalisierten Repräsentation des Fotoprodukts eine Internetadresse, das heißt einen "Link", mit zu senden, wobei ein oder mehrere andere Personen, die die zusammen mit dem Link versendete personalisierte Repräsentation beispielsweise in einer Online-Fotogalerie betrachten, diese mittels des Links bestellen können.

Weiter ist bevorzugt, dass die Vorrichtung eine Bestelleinheit zum Erzeugen einer Bestellung zum Bestellen eines der Repräsentation entsprechenden personalisierten Fotoprodukts aufweist, wobei die Bestellung die Repräsentation des personalisierten Fotoprodukts und Bestelldaten umfasst. Die Bestelleinheit kann ausgebildet sein, eine Repräsentation des personalisierten Fotoprodukts an einen Hersteller zum Herstellen des personalisierten Fotoprodukts mittels der Sendeeinheit zu senden. Die Bestelleinheit ist bevorzugt eine Hardware- oder Softwarekomponente, die eine Bestellung über das Internet oder eine andere Datenverbindung bei einem Hersteller zum Herstellen des personalisierten Fotoprodukts ermöglicht. Der Hersteller erzeugt dann das personalisierte Fotoprodukt gemäß der empfangenen personalisierten Repräsentation des Fotoprodukts, wobei das hergestellte Fotoprodukt dann beispielsweise per Post zu dem Benutzer gesendet werden kann.

Die oben genannte Aufgabe wird des Weiteren durch ein Verfahren zum Erzeugen einer Repräsentation eines personalisierten Fotoprodukts gelöst, wobei das Verfahren die Schritte aufweist:
- Bereitstellen einer Repräsentation eines Fotoprodukts durch eine Produktbereitstellungseinheit,
- Eingeben eines von einem Benutzer mit einem Stift erzeugbaren persönlichen Elements durch eine Eingabeeinheit,
- Personalisieren der Repräsentation des Fotoprodukts mittels des eingegebenen persönlichen Elements durch eine Personalisierungseinheit.

Die oben genannte Aufgabe wird des Weiteren durch ein Computerprogramm zum Herstellen einer Repräsentation eines personalisierten Fotoprodukts gelöst, wobei das Computerprogramm Programmcodemittel aufweist, die angepasst sind, eine Vorrichtung zum Herstellen einer Repräsentation eines personalisierten Fotoprodukts gemäß Anspruch 1 derart zu steuern, dass das Verfahren zum Herstellen einer Repräsentation eines personalisierten Fotoprodukts gemäß Anspruch 10 durchgeführt wird, wenn das Computerprogramm auf einem Computer durchgeführt wird, der die Vorrichtung steuert.

Es sollte verstanden werden, dass die Vorrichtung nach Anspruch 1, das Verfahren nach Anspruch 10 und das Computerprogramm nach Anspruch 11 ähnliche und/oder identische bevorzugte Ausführungsformen aufweisen, wie sie insbesondere in den abhängigen Ansprüchen definiert sind.

Ausführungsformen der Erfindung werden unter Bezugnahme auf folgende Figuren beschrieben, wobei
- Fig. 1: schematisch und exemplarisch eine Ausführungsform einer Vorrichtung zum Herstellen einer Repräsentation eines personalisierten Fotoprodukts zeigt, und
- Fig. 2: ein Flussdiagramm zeigt, das eine Ausführungsform eines Verfahrens zum Herstellen einer Repräsentation eines personalisierten Fotoprodukts illustriert.

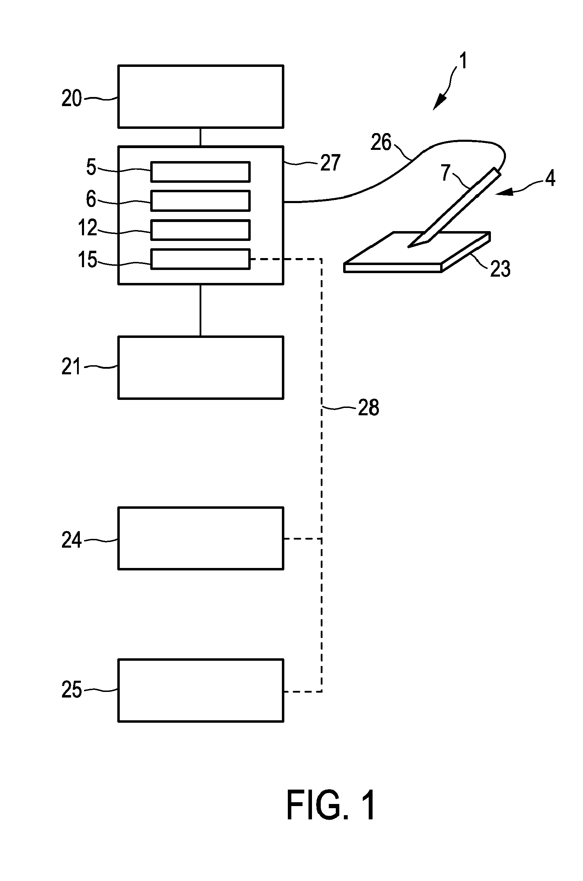

Fig. 1 zeigt schematisch und exemplarisch eine Ausführungsform einer Vorrichtung 1 zum Herstellen einer Repräsentation eines personalisierten Fotoprodukts. Die Vorrichtung 1 umfasst einen Computer 27 mit einem Monitor 20 und einem Eingabemittel 21. Das Eingabemittel 21 ist beispielsweise eine Tastatur, eine Computermouse oder ein anderes Eingabemittel zum Eingeben von Informationen in den Computer 27. Der Computer 27 ist mittels einer Datenverbindung 26 mit einer Eingabeeinheit 4 verbunden, wobei die Datenverbindung 26 eine drahtgebundene Datenverbindung oder auch eine drahtlose Datenverbindung sein kann. Die Eingabeeinheit 4 ist derart konfiguriert, dass ein Benutzer ein mit einem Stift erzeugbares persönliches Element erzeugen kann. In dieser Ausführungsform umfasst die Eingabeeinheit 4 einen Digitalstift 7 und Digitalpapier 23, wobei die Eingabeeinheit 4 angepasst ist, eine Bewegung des Digitalstifts 7 auf dem Digitalpapier 23 zu erfassen und mittels der Datenverbindung 26 an den Computer 27 zu übermitteln. Die Datenverbindung 26 kann auch kabellos als Funkübertragung ausgebildet sein. Alternativ weist der Digitalstift 7 einen Speicher und einen USB-Anschluss auf, so dass eine erfasste Bewegung zunächst gespeichert und anschließend mittels einer USB-Schnittstelle an den Computer 27 übermittelt werden kann. Eine durch einen Benutzer durchgeführte Bewegung des Digitalstifts 7 zur Erzeugung des persönlichen Elements, insbesondere zur Erzeugung einer Handschrift oder einer Handskizze, kann daher erfasst und an den Computer 27 übertragen werden. In dieser Ausführungsform umfasst der Digitalstift eine Kugelschreibermine, eine Infrarotkamera, einen Prozessor, einen Datenspeicher, eine Batterie und eine Sendeeinheit, mittels der die erfasste Bewegung an den Computer 27 gesendet wird. Der Digitalstift ist so konfiguriert, dass die Infrarotkamera während des Schreibens die Bewegung der Kugelschreibermine auf insbesondere einem Punktraster des Digitalpapiers erfasst, die dann im Datenspeicher zumindest zwischengespeichert wird. Die erfasste Bewegung und damit die Handschrift bzw. die Handskizze werden dann von der Sendeeinheit des Digitalstifts über die Datenverbindung 26 an den Computer 27 gesendet.

Der Computer 27 weist eine Produktbereitstellungseinheit 5 zum Bereitstellen einer Repräsentation eines Fotoprodukts und eine Personalisierungseinheit 6 zum Personalisieren der Repräsentation des Fotoprodukts mittels des eingegebenen persönlichen Elements auf. Die Produktbereitstellungseinheit 5 ist ausgebildet, eine Repräsentation eines Fotobuchs bereitzustellen. In anderen Ausführungsformen kann die Produktbereitstellungseinheit auch ausgebildet sein, zusätzlich oder alternativ andere Produktrepräsentationen bereitzustellen, wie beispielsweise eine Repräsentation einer Fotogrußkarte, einer Fototasse, eines Fotokalender, et cetera. In diesem Ausführungsbeispiel ist die Produktbereitstellungseinheit 5 angepasst, eine Repräsentation eines Fotobuchs auf bekannte Art und Weise zu erzeugen, wobei dann das Fotobuch, das heißt die erzeugte Repräsentation des Fotobuchs, auf dem Monitor 20 dargestellt wird.

Die Personalisierungseinheit 6 ist angepasst, die mittels des Digitalstifts erzeugte Handschrift bzw. Handskizze in die bereitgestellte Repräsentation des Fotobuchs einzufügen. Diese Einfügung kann beispielsweise an einer vordefinierten Stelle im Fotobuch erfolgen, oder ein Benutzer kann einen Bereich auf der bereitgestellten Repräsentation des Fotobuchs auswählen, in dem die Handschrift bzw. Handskizze einzufügen ist. Hierzu kann die Personalisierungseinheit 6 eine grafische Benutzeroberfläche bereitstellen, die es einem Benutzer ermöglicht, durch das Eingabemittel 21 einen Bereich der Repräsentation des Fotobuchs zu wählen, in den die Handschrift bzw. die Handskizze eingefügt werden sollte. Die grafische Benutzeroberfläche kann des Weiteren so ausgebildet sein, dass andere Merkmale der Handschrift bzw. Handskizze verändert werden können. Beispielsweise könnte die Handschrift bzw. Handskizze eingefärbt, gestreckt oder gestaucht, gedreht oder skaliert werden.

Die Eingabeeinheit 4 und die Personalisierungseinheit 6 sind bevorzugt so ausgebildet, dass ein von dem Benutzer eingegebenes persönliches Element, das heißt in dieser Ausführungsform die Handskizze oder die Handschrift, in Echtzeit in den ausgewählten Bereich eingefügt wird. Nachdem die Produktbereitstellungseinheit die Repräsentation des Fotobuchs bereitgestellt hat, kann ein Benutzer durch das Eingabemittel 21 und eine entsprechende grafische Benutzeroberfläche einen Bereich in der Repräsentation des Fotobuchs wählen, in den die Handschrift bzw. Handskizze eingefügt werden sollte. Wenn dann mittels des Digitalstifts 7 und des Digitalpapiers 23 eine Handschrift bzw. eine Handskizze erfasst wird, kann gleichzeitig mit der Erfassung die Entwicklung, das heißt das Fortschreiten, der entsprechenden Handschrift bzw. Handskizze in dem ausgewählten Bereich in der Repräsentation des Fotobuchs angezeigt werden. Die Anzeige der Repräsentation des Fotobuchs, der Handschrift bzw. der Handskizze, der grafischen Benutzeroberfläche, et cetera erfolgt auf dem Monitor 20.

Der Computer 27 umfasst des Weiteren eine Bestelleinheit 12 zum Erzeugen einer Bestellung zum Bestellen eines der Repräsentationen entsprechenden personalisierten Fotoprodukts, wobei die Bestellung die Repräsentation des personalisierten Fotoprodukts und Bestelldaten umfasst. In dieser Ausführungsform weist die Bestelleinheit 12 eine grafische Benutzeroberfläche auf, dies es einem Benutzer zusammen mit dem Eingabemittel 21 ermöglicht, Bestelldaten einzugeben. Die Bestelldaten umfassen, beispielsweise, die Anzahl der herzustellenden Fotobücher, Zustelladressen, Rechnungsdaten, et cetera. Die Bestellung mit der Repräsentation des personalisierten Fotoprodukts und den Bestelldaten wird dann von einer Sendeeinheit 15 über ein Netzwerk 28 an einen Hersteller 24 gesendet. Das Netzwerk 28 ist beispielsweise das Internet. Der Hersteller erzeugt dann das personalisierte Fotoprodukt gemäß der empfangenen Repräsentation des personalisierten Fotoprodukts und gemäß den Bestelldaten, wobei nach der Herstellung das hergestellte personalisierte Fotoprodukt beispielsweise auf dem Postwege zu dem Benutzer gesendet wird.

Die Sendeeinheit 15 kann über das Netzwerk 28 die Repräsentation des personalisierten Fotoprodukts auch an einen anderen Empfänger 25 senden. Der andere Empfänger 25 ist beispielsweise ein Server eines sogenannten sozialen Netzwerkes, wie beispielsweise Facebook. Die Sendeeinheit 15 kann beispielsweise angepasst sein, zusammen mit der Repräsentation des personalisierten Fotoprodukts eine Internetadresse an den Empfänger 25 zu senden, wobei eine oder mehrere andere Personen des sozialen Netzwerkes die Repräsentation des personalisierten Fotoprodukts betrachten und mittels der gesendeten Internetadresse bestellen können. So ist es beispielsweise möglich, dass die Repräsentation des personalisierten Fotoprodukts in dem sozialen Netzwerk gepostet wird und andere, durch den Benutzer dazu befugte Personen, diese Repräsentation wiederum posten bzw. in eigene Galerien oder dergleichen des sozialen Netzwerks einbinden können. Dazu ist es bevorzugt, dass das soziale Netzwerk Einrichtungen vorsieht, um den Zugriff auf die zugänglich gemachte bzw. gepostete Repräsentation zu beschränken. Dies ist bevorzugt auch für die Internetadresse, über die ein der Repräsentation entsprechendes Fotoprodukt bestellt werden kann, vorgesehen. So kann etwa ein zum Bestellen befugter Benutzer über die Internetadresse, die etwa in Form eines Links in räumlicher Nähe zu der Repräsentation angezeigt wird, bspw. zu einem Online-Bestellformular gelangen. Die Online-Fotogalerie, in die die Repräsentation eingebunden ist, kann bevorzugt derart konfiguriert sein, dass sie, wenn eine Person die Internetadresse mittels des Links selektiert, das personalisierte Fotobuch bzw. deren Repräsentation automatisch an die Internetadresse sendet und dann automatisch einen Bestellvorgang auslöst. Auch können Deeplinks vorgesehen sein, die durch einen Benutzer bspw. per E-Mail versendet werden können und auf die Repräsentation des Fotoprodukts in dem sozialen Netzwerk verweisen.

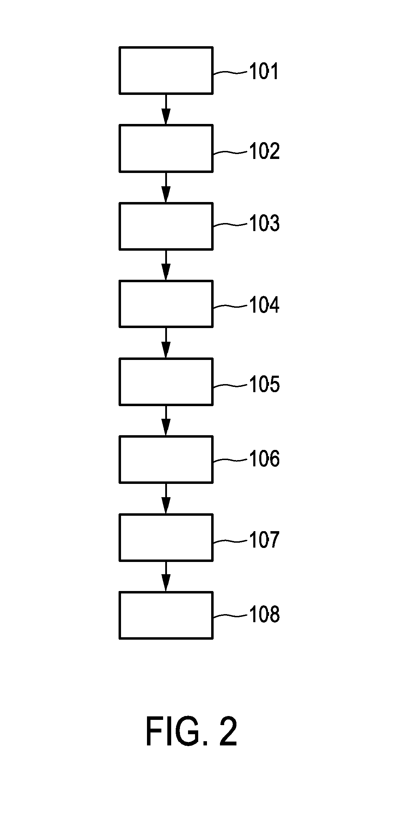

Im Folgenden wird eine Ausführungsform eines Verfahrens zum Herstellen einer Repräsentation eines personalisierten Fotoprodukts beispielhaft anhand des in Fig. 2 gezeigten Flussdiagramms beschrieben.

In Schritt 101 wird durch die Produktbereitstellungseinheit 5 eine Repräsentation eines Fotoprodukts bereitgestellt. Die Produktbereitstellungseinheit 5 ist insbesondere ein Computerprogramm zur Erzeugung einer Repräsentation eines Fotobuchs, wobei das erzeugte Fotobuch auf dem Monitor 20 dargestellt wird. In Schritt 102 kann der Benutzer mittels der Personalisierungseinheit 6 einen Bereich auf der Repräsentation des Fotoprodukts auswählen, in dem ein mit einem Stift erzeugbares persönliches Element eingefügt werden soll. Die Personalisierungseinheit 6 weist beispielsweise eine grafische Benutzeroberfläche auf, die es zusammen mit dem Eingabemittel 21 dem Benutzer ermöglicht, einen entsprechenden Bereich beispielsweise einer Repräsentation eines Fotobuchs auszuwählen. In Schritt 104 wird ein von einem Benutzer mit einem Stift erzeugbares persönliches Element durch die Eingabeeinheit 4 in die Vorrichtung 1, insbesondere in den Computer 27, eingegeben. Insbesondere wird durch den Digitalstift 7 eine Handbewegung des Benutzers erfasst und über die Datenverbindung 26 in den Computer 27 eingegeben. In Schritt 104 wird die Repräsentation des Fotoprodukts mittels des persönlichen Elements durch die Personalisierungseinheit 6 personalisiert. Vorzugsweise wird die durch den Digitalstift 7 erfasste Handschrift oder Handskizze als persönliches Element in den in Schritt 102 ausgewählten Bereich der Repräsentation des Fotobuchs eingefügt. Optional kann der Benutzer mittels einer von der Personalisierungseinheit 6 bereitgestellten grafischen Benutzeroberfläche die Einfügung der Handschrift bzw. Handskizze verändern. Beispielsweise kann die Handschrift bzw. Handskizze verschoben, skaliert, gestreckt oder gestaucht werden. Auch kann die Farbe der Handschrift bzw. Handskizze verändert werden. In Schritt 105 wird mittels der Bestelleinheit 12 eine Bestellung zum Bestellen eines der Repräsentation entsprechenden personalisierten Fotoprodukts erzeugt. Die Bestelleinheit 12, die bevorzugt eine Software ist, stellt beispielsweise eine grafische Benutzeroberfläche bereit, die es einem Benutzer zusammen mit der Eingabeeinheit 21 ermöglicht, Bestelldaten wie die Anzahl der zu bestellenden Fotobücher einzugeben. Die Bestellung besteht dann aus der Repräsentation des personalisierten Fotoprodukts und den Bestelldaten. Die Bestellung wird dann über das Netzwerk 28 mittels der Sendeeinheit 15 an einen Hersteller 24 in Schritt 106 übermittelt, der das personalisierte Fotoprodukt in Schritt 107 entsprechend der übermittelten Repräsentation und der Bestelldaten erzeugt und in Schritt 108 an den Benutzer beispielsweise per Post schickt.

In anderen Ausführungsformen kann das Verfahren andere Schritte aufweisen und/oder die Schritte können in einer anderen Reihenfolge durchgeführt werden. Beispielsweise können die Schritte 103 und 104, das heißt das Eingeben des persönlichen Elements wie der Handschrift oder der Handskizze und das Personalisieren der Repräsentation des Fotoprodukts, gleichzeitig durchgeführt werden, insbesondere indem in Echtzeit die Bewegung des Digitalstifts 7 erfasst und die dadurch erzeugte Handschrift bzw. Handskizze auf dem Monitor 20 in Echtzeit in der Repräsentation des Fotoprodukts gezeigt wird.

Obwohl in den oben beschriebenen Ausführungsformen die Eingabeeinheit einen Digitalstift umfasst, kann in anderen Ausführungsformen das persönliche Element auch mit anderen Mitteln erzeugt werden. Beispielsweise kann die Eingabeeinheit einen Touchscreen aufweisen oder mit einem Touchscreen verbunden sein, so dass ein Benutzer auf dem Touchscreen eine Bewegung durchführen kann, die beispielsweise als Handschrift oder Handskizze erfasst wird. Beispielsweise kann der Monitor 20 als Touchscreen ausgebildet sein, so dass mittels des Monitors 20 das mit einem Stift erzeugbare persönliche Element erfasst werden kann. In diesem Fall würde der Monitor 20 die Eingabeeinheit zum Eingeben eines von einem Benutzer mit einem Stift erzeugbaren persönlichen Elements bilden.

Die Vorrichtung zum Herstellen einer Repräsentation eines personalisierten Fotoprodukts kann einen Heim-Computer umfassen. Die Vorrichtung kann aber auch beispielsweise derart ausgebildet sein, dass sie in Kaufhäusern oder Drogerien aufgestellt werden kann. Die Vorrichtung kann zudem ausgebildet sein, ein personalisiertes Fotoprodukt entsprechend der erzeugten Repräsentation selbst zu erstellen. Hierzu kann die Vorrichtung eine Herstellungseinheit aufweisen, die beispielsweise eine Fotogrußkarte mit der eingegebenen Handschrift bzw. Handskizze herstellt. Beispielsweise kann die Vorrichtung einen Drucker aufweisen, der entsprechende personalisierte Fotogrußkarten druckt.

Die Eingabeeinheit 4 kann auch als eine Schnittstelle ausgebildet sein, mittels der die Vorrichtung zum Herstellen der Repräsentation des personalisierten Fotoprodukts mit beispielsweise einem Mobiltelefon oder einem portablem Computer eines Benutzers über eine Datenverbindung verbindbar ist. Beispielsweise kann das Mobiltelefon oder der portable Computer mittels einer drahtlosen Verbindung wie einer Bluetooth-Datenverbindung mit der Vorrichtung verbindbar sein. In einer Ausführungsform verfügt das Mobiltelefon oder der portable Computer über einen Touchscreen, wobei der Benutzer mittels der Schnittstelle den Touchscreen seines Mobiltelefons oder portablen Computers nutzen kann, um das persönliche Element zu erzeugen. Über die Schnittstelle wird dann das persönliche Element, das heißt beispielsweise die Handschrift oder die Handskizze, an die Personalisierungseinheit übermittelt.

Obwohl in der oben unter Bezugnahme auf Fig. 1 beschriebenen Ausführungsform die Eingabeeinheit 4 den Digitalstift 7 mit dem Digitalpapier 23 aufweist, kann in anderen Ausführungsformen die Eingabeeinheit 4 auch nur als Schnittstelle ausgebildet sein, die beispielsweise mit einem Digitalstift 7 kommuniziert, um das persönliche Element zu erzeugen.

Die Vorrichtung kann zudem einen Fotospeicher aufweisen, in dem digitale Fotos gespeichert sind. Ein solcher Fotospeicher kann beispielsweise eine Festplatte sein. Die Vorrichtung kann zusätzlich oder alternativ auch eine Schnittstelle aufweisen, mittels der die Vorrichtung mit einem Fotospeicher verbindbar ist. Ein derartiger externer Fotospeicher kann beispielsweise der Fotospeicher einer Digitalkamera oder ein Fotospeicher eines anderen Rechners bzw. eines Rechnernetzwerks sein. So kann beispielsweise die Vorrichtung über das Internet mit Online-Fotogalerien, wie sie in sozialen Netzwerken vorhanden sein können, verbunden sein. Die Produktbereitstellungseinheit ist bevorzugt angepasst, unter Verwendung der gespeicherten digitalen Fotos eine Repräsentation eines Fotoprodukts bereitzustellen.

Obwohl in den oben genannten Ausführungsformen Fotobücher und Fotogrußkarten als bevorzugte Fotoprodukte genannt worden sind, kann die Vorrichtung auch angepasst sein, Repräsentationen anderer Fotoprodukte zu erzeugen. Beispielsweise kann die Vorrichtung angepasst sein, personalisierte Fototassen, Fotokalender, Foto-Kleidungsstücke, Foto-Poster et cetera zu erzeugen.

Obwohl in der unter Bezugnahme auf Fig. 1 beschriebenen Ausführungsform der Computer 27 einzelne Einheiten aufweist, können in anderen Ausführungsformen diese Einheiten auch auf mehrere Computer verteilt sein, beispielsweise über mehrere Computer, die mittels des Internets miteinander verbunden sind. Einzelne Einheiten der Vorrichtung können auch lediglich als Schnittstellen ausgebildet sein, die mit entsprechenden Hardware- oder Software-Komponenten kommunizieren, um die jeweilige Funktion zu erfüllen. So kann beispielsweise die Produktbereitstellungseinheit durch eine entsprechende Schnittstelle eines Computers realisiert sein, die mit einer externen Hardware- oder Software-Komponente kommuniziert, um einem Benutzer des Computers das Bereitstellen einer Repräsentation eines Fotoprodukts, insbesondere das Erzeugen eines Fotobuchs, zu ermöglichen.

Es sollte verstanden werden, dass die Erfindung nicht darauf beschränkt ist, für eine Repräsentation eines Fotoprodukts ein einziges persönliches Element zu erzeugen, sondern es können selbstverständlich eine Mehrzahl von persönlichen Elementen für eine einzige Repräsentation eines Fotoprodukts zum Personalisieren dieser Repräsentation verwendet werden. Ebenso ist es möglich, ein einmal erstelltes persönliches Element abzuspeichern, vorzugsweise auf einem geeigneten Speichermedium, um dieses persönliche Element für eine Mehrzahl von Repräsentationen von Fotoprodukten, insbesondere auch verschiedenen Fotoprodukten, zu nutzen.

In den Ansprüchen schließen die Wörter "aufweisen" und "umfassen" nicht andere Elemente oder Schritte aus und der unbestimmte Artikel "ein" schließt eine Mehrzahl nicht aus.

Eine einzelne Einheit oder Vorrichtung kann die Funktionen mehrerer Elemente durchführen, die in den Ansprüchen aufgeführt sind. Beispielsweise müssen die Eingabeeinheit, die Produktbereitstellungseinheit und die Personalisierungseinheit nicht zwangsläufig getrennt sein, sondern können auch gemeinsam eine Einheit bilden. Die Tatsache, dass einzelne Funktionen und Elemente in unterschiedlichen abhängigen Ansprüchen aufgeführt sind, bedeutet nicht, dass nicht auch eine Kombination dieser Funktionen oder Elemente vorteilhaft verwendet werden könnte.

Die Steuerung der Vorrichtung zur Herstellung einer Repräsentation eines personalisierten Fotoprodukts gemäß dem Verfahren zum Herstellen einer Repräsentation eines personalisierten Fotoprodukts kann als Programmcode eines Computerprogramms und/oder als entsprechende Hardware implementiert sein.

Ein Computerprogramm kann auf einem geeigneten Medium gespeichert werden, wie beispielsweise einem optischen Speichermedium oder einem Festkörperspeichermedium, das zusammen mit oder als Teil anderer Hardware vertrieben werden kann. Das Computerprogramm kann aber auch auf andere Art vertrieben werden, beispielsweise über das Internet oder andere Telekommunikationssysteme.

Die Bezugszeichen in den Ansprüchen sind nicht derart zu verstehen, dass der Gegenstand und der Schutzbereich der Ansprüche durch diese Bezugszeichen eingeschränkt werden.

## Patentansprüche

1. Vorrichtung (1) zum Erzeugen einer Repräsentation eines personalisierten Fotoprodukts, **dadurch gekennzeichnet, dass** die Vorrichtung aufweist:
- eine Eingabeeinheit (4) zum Eingeben eines von einem Benutzer mit einem Stift erzeugbaren persönlichen Elements,
- eine Produktbereitstellungseinheit (5) zum Bereitstellen einer Repräsentation eines Fotoprodukts,
- eine Personalisierungseinheit (6) zum Personalisieren der Repräsentation des Fotoprodukts mittels des eingegebenen persönlichen Elements.

2. Vorrichtung nach Anspruch 1, **dadurch gekennzeichnet, dass** die Eingabeeinheit (4) einen Stift (7) aufweist, wobei die Eingabeeinheit (4) ausgebildet ist, eine durch einen Benutzer durchgeführte Bewegung des Stifts (7) zur Erzeugung des persönlichen Elements zu erfassen.

3. Vorrichtung nach einem der Ansprüche 1 oder 2, **dadurch gekennzeichnet, dass** die Eingabeeinheit ein Touchscreen aufweist, wobei die Eingabeeinheit angepasst ist, eine auf dem Touchscreen durchgeführte Bewegung zur Erzeugung des persönlichen Elements zu erfassen.

4. Vorrichtung nach einem der vorhergehenden Ansprüche, **dadurch gekennzeichnet, dass** das persönliche Element eine Handschrift oder eine Handskizze ist.

5. Vorrichtung nach einem der vorhergehenden Ansprüche, **dadurch gekennzeichnet, dass** die Produktbereitstellungseinheit (5) ausgebildet ist, zumindest eines der folgenden Produktrepräsentationen als Repräsentation des Fotoprodukts bereitzustellen: Fotobuch, Fotogrußkarte, Fototasse, Fotokalender.

6. Vorrichtung nach einem der vorhergehenden Ansprüche, **dadurch gekennzeichnet, dass** die Personalisierungseinheit (6) ausgebildet ist, dem Benutzer zu ermöglichen, einen Bereich auf der Repräsentation des Fotoprodukts auszuwählen, wobei die Personalisierungseinheit (6) angepasst ist, das persönliche Element in den ausgewählten Bereich einzufügen.

7. Vorrichtung nach Anspruch 6, **dadurch gekennzeichnet, dass** die Eingabeeinheit (4) und die Personalisierungseinheit (6) ausgebildet sind, ein von dem Benutzer eingegebenes persönliches Element in Echtzeit in den ausgewählten Bereich einzufügen.

8. Vorrichtung nach einem der vorhergehenden Ansprüche, **dadurch gekennzeichnet, dass** die Vorrichtung eine Sendeeinheit (15) zum Senden der Repräsentation des personalisierten Fotoprodukts an einen Empfänger (24, 25) aufweist.

9. Vorrichtung nach einem der vorhergehenden Ansprüche, **dadurch gekennzeichnet, dass** die Vorrichtung (1) eine Bestelleinheit (12) zum Erzeugen einer Bestellung zum Bestellen eines der Repräsentation entsprechenden personalisierten Fotoprodukts aufweist, wobei die Bestellung die Repräsentation des personalisierten Fotoprodukts und Bestelldaten umfasst.

10. Verfahren zum Erzeugen einer Repräsentation eines personalisierten Fotoprodukts, **dadurch gekennzeichnet, dass** das Verfahren aufweist:
- Bereitstellen einer Repräsentation eines Fotoprodukts durch eine Produktbereitstellungseinheit (5),
- Eingeben eines von einem Benutzer mit einem Stift erzeugbaren persönlichen Elements durch eine Eingabeeinheit (4),
- Personalisieren der Repräsentation des Fotoprodukts mittels des eingegebenen persönlichen Elements durch eine Personalisierungseinheit (6).

11. Computerprogramm zum Erzeugen einer Repräsentation eines personalisierten Fotoprodukts, **dadurch gekennzeichnet, dass** das Computerprogramm Programmcodemittel aufweist, die angepasst sind, eine Vorrichtung (1) zum Erzeugen einer Repräsentation eines personalisierten Fotoprodukts gemäß Anspruch 1 derart zu steuern, dass das Verfahren zum Erzeugen einer Repräsentation eines personalisierten Fotoprodukts gemäß Anspruch 10 durchgeführt wird, wenn das Computerprogramm auf einem Computer durchgeführt wird, der die Vorrichtung (1) steuert.
